# EUROPÄISCHE PATENTANMELDUNG

(11) **EP 2 415 555 A1**
(43) Veröffentlichungstag der Anmeldung: **08.02.2012**
(21) Anmeldenummer: 11173428.1
(22) Anmeldetag: 11.07.2011
(51) Int. Cl.: B23Q 1/54, B23Q 3/06

(54) **Vorrichtung zum Einspannen von Gehäusen**

(30) Priorität: 02.08.2010 DE 202010008205 U
(71) Anmelder: W.T. Armatur GmbH, 67133 Maxdorf (DE)
(72) Erfinder: Hemmer, Emil, 76761 Rülzheim (DE); Fischer, Herbert, 74081 Heilbronn (DE)
(74) Vertreter: Wiebusch, Manfred

(57) **Zusammenfassung**

1. Vorrichtung zum Einspannen von Gehäusen (24), die mehrere Anschlussöffnungen (50) aufweisen, deren Achsen in einer gemeinsamen Ebene liegen, in eine Werkzeugmaschine, mit einer relativ zu einem Werkzeug (16) der Werkzeugmaschine um eine Bearbeitungsachse (Z) drehbaren Spannplatte (10) und Spannelementen (26, 28, 30) zum Fixieren des Gehäuses (24) in einer auf die Bearbeitungsachse (Z) ausgerichteten Position auf der Spannplatte (10), dadurch gekennzeichnet, dass die Spannelemente (26, 28, 30) an einem Träger (22) angeordnet sind, der relativ zu der Spannplatte (10) um eine Achse (X) drehbar ist, die die Bearbeitungsachse (Z) rechtwinklig schneidet und senkrecht auf der durch die Achsen der Anschlussöffnungen (50) definierten Ebene steht, und dass dem Träger (22) eine Winkelmesseinrichtung (46) zugeordnet ist.

## Beschreibung

Die Erfindung betrifft eine Vorrichtung zum Einspannen von Gehäusen, die mehrere Anschlussöffnungen aufweisen, deren Achsen in einer gemeinsamen Ebene liegen, in eine Werkzeugmaschine, mit einer relativ zu einem Werkzeug der Werkzeugmaschine um eine Bearbeitungsachse drehbaren Spannplatte und Spannelementen zum Fixieren des Gehäuses in einer auf die Bearbeitungsachse ausgerichteten Position auf der Spannplatte.

Insbesondere befasst sich die Erfindung mit einer Vorrichtung zum Einspannen von Armaturengehäusen, beispielsweise Ventilgehäusen. Bei den Anschlussöffnungen handelt es sich dann beispielsweise um Einlass- und Auslassöffnungen für ein Fluid und um Öffnungen für Stellarmaturen. Solche Gehäuse, deren Abmessungen von einigen Zentimetern bis zu einem Meter oder mehr betragen können, bestehen zumeist aus Metallguss, müssen jedoch im Bereich der Anschlussöffnungen auf einer Werkzeugmaschine nachbearbeitet werden, etwa um die Innenflächen der Fluidanschlüsse und die Flächen von Ventilsitzen und dergleichen zu vergüten, Flanschbohrungen herzustellen, und dergleichen. Das lagerichtige Einspannen der Gehäuse in der Werkzeugmaschine ist ein relativ komplexer und zeitraubender Vorgang. Es sind Werkzeugmaschinen mit schwenkbaren Werkzeugen bekannt, bei denen sich die Lage der Bearbeitungsachse an die Orientierung der jeweils zu bearbeitenden Anschlussöffnung anpassen lässt. Auch in diesem Fall ist jedoch die exakte Ausrichtung der Gehäuse auf die Bearbeitungsachse sehr aufwendig.

Aufgabe der Erfindung ist es, eine Vorrichtung zu schaffen, die die Bearbeitung der Gehäuse auf der Werkzeugmaschine erleichtert.

Diese Aufgabe wird erfindungsgemäß dadurch gelöst, dass die Spannelemente an einem Träger angeordnet sind, der relativ zu der Spannplatte um eine Achse drehbar ist, die die Bearbeitungsachse rechtwinklig schneidet und senkrecht auf der durch die Achsen der Anschlussöffnungen definierten Ebene steht, und dass dem Träger eine Winkelmesseinrichtung zugeordnet ist.

Diese Vorrichtung erlaubt es, die Anschlussöffnungen des Gehäuses nacheinander zu bearbeiten, indem der Träger jeweils in eine Winkelstellung gedreht wird, in der die Achse der zu bearbeitenden Anschlussöffnung mit der Bearbeitungsachse der Werkzeugmaschine zusammenfällt. Die mit Hilfe der Spannelemente bewirkte Einspannung des Gehäuses auf dem Träger braucht dabei nicht verändert zu werden, so dass eine erhebliche Arbeitsersparnis erreicht wird. Die Bearbeitungszeit wird reduziert, und zugleich wird die Genauigkeit der Bearbeitung verbessert.

Die Bearbeitungsachse ist hier definiert als diejenige Achse, um welche die Spannplatte und das Werkzeug der Werkzeugmaschine relativ zueinander drehbar sind. Beispielsweise kann die Spannplatte auf einer drehbaren Spindel montiert sein, so dass sich die Spannplatte mitsamt des Trägers und dem darauf eingespannten Gehäuse relativ zu einem feststehenden (oder allenfalls längs der Bearbeitungsachse beweglichen) Werkzeugkopf der Werkzeugmaschine drehen lässt. Alternativ kann die Bearbeitungsachse jedoch auch durch die Drehachse eines Werkzeugs definiert sein, das relativ zu der feststehenden Spannplatte rotiert.

Das Werkzeug wird so auf dem Träger eingespannt, dass der Punkt an dem sich die Achsen der mehreren Anschlussöffnungen schneiden, mit dem Schnittpunkt der Bearbeitungsachse und der Drehachse des Trägers zusammenfällt. Da die Anschlussöffnungen in einer gemeinsamen Ebene liegen, kann dann die Achse jede Anschlussöffnung durch eine entsprechende Drehung des Trägers auf die Bearbeitungsachse ausgerichtet werden. Die Winkelmesseinrichtung erlaubt es, den Winkel, um welchen der Träger dabei gedreht wird, präzise zu kontrollieren.

Vorteilhafte Ausgestaltungen und Weiterbildungen der Erfindung sind in den Unteransprüchen angegeben.

In einer bevorzugten Ausführungsform weist die Spannplatte eine drehbare Welle auf, an der sich der Träger mitsamt des eingespannten Gehäuses in einer definierten Winkelstellung und Axialposition lösbar fixieren lässt. Das Einspannen des Gehäuses auf dem Träger mit Hilfe der Spannelemente kann dann in einer separaten Ausrichtstation erfolgen. Dabei wird das Gehäuse mit Hilfe der Spannelemente so justiert, dass das Gehäuse die korrekte Lage in Bezug auf die Bearbeitungsachse und die Drehachse des Trägers einnimmt, sobald der Träger an die Welle der Spannplatte angekuppelt ist.

Die lagerichtige Justierung des Gehäuses auf dem Träger wird vorzugsweise dadurch erreicht, dass das Gehäuse in der Ausrichtstation mit mehreren Zentrierstempeln gehalten wird, die jeweils in eine der Anschlussöffnungen des Gehäuses eingreifen.

Mindestens zwei der Zentrierstempel können innerhalb der Ausrichtstation um eine definierte Achse relativ zueinander drehbar sein, so dass sich die Konfiguration der Zentrierstempel an die jeweilige Konfiguration der Anschlussöffnungen des Gehäuses anpassen lässt.

Nachdem das Gehäuse mit Hilfe der Zentrierstempel justiert wurde, wird es mit Hilfe der Spannelemente in dieser Position fixiert. Anschließend werden die Zentrierstempel entfernt, und der Träger mit dem darauf eingespannten Gehäuse wird mit Hilfe eines Krans oder dergleichen zu der Spannplatte auf der Spindel der Werkzeugmaschine überführt und an die Welle dieser Spannplatte angekuppelt.

Bevorzugt ist die Welle der Spannplatte mit einem Antriebsmechanismus verbunden, beispielsweise in der Form eines Schneckengetriebes, der eine kontrollierte Drehung des Trägers erlaubt. Als Antriebsquelle kann dabei ein drehantreibbares Werkzeug der Werkzeugmaschine verwendet werden, beispielsweise ein Schrauber oder dergleichen. Im folgenden wird ein Ausführungsbeispiel der Erfindung anhand der Zeichnung näher erläutert.

Es zeigen:
- Fig. 1: eine schematische Frontansicht einer erfindungsgemäßen Vorrichtung auf einer drehantreibbaren Spindel einer Werkzeugmaschine;
- Fig. 2: einen Grundriss einer Ausrichtstation;
- Fig. 3: eine Frontansicht der Spannvorrichtung analog zu Fig. 1, jedoch in einer Betriebsphase, in der ein lösbarer Träger an eine Spannplatte der Vorrichtung angekuppelt wird;
- Fig. 4: einen Grundriss der Ausrichtstation nach Fig. 2 in einer modifizierten Konfiguration; und
- Fig. 5 bis 7: Seitenansichten der Spannvorrichtung nach Fig. 1 mit einem darin eingespannten, im Schnitt dargestellten Gehäuse in unterschiedlichen Stadien eines Bearbeitungsablaufes.

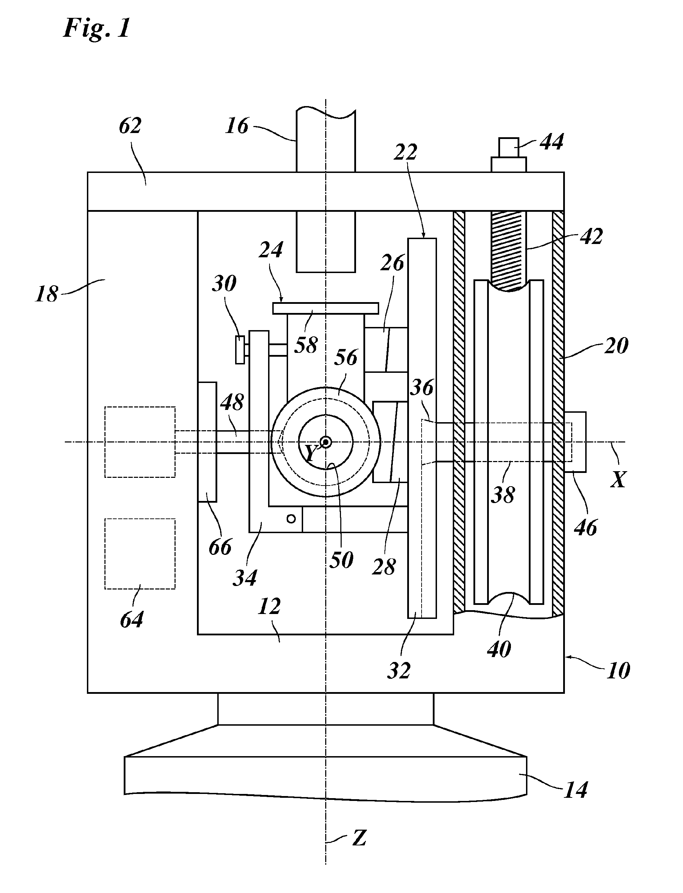

Die in Fig. 1 gezeigte Vorrichtung weist eine Spannplatte 10 auf, die eine insgesamt U-förmige Konfiguration hat und mit ihrer Basis 12 drehfest an eine drehantreibbare Spindel 14 einer Werkzeugmaschine angekuppelt ist. Die Drehachse der Spindel 14 ist im gezeigten Beispiel vertikal orientiert und wird als Bearbeitungsachse Z bezeichnet. Sie fällt zusammen mit der Achse eines hier nur schematisch angedeuteten Werkzeugs 16 der Werkzeugmaschine.

Die beiden aufragenden Schenkel 18, 20 der Spannplatte 10 begrenzen einen nach oben offenen Raum, in dem ein Träger 22 aufgenommen ist. Ein zu bearbeitendes Gehäuse 24, beispielsweise ein Ventilgehäuse, ist mit Hilfe von Spannelementen 26, 28, 30 an dem Träger 22 fixiert. Bei den Spannelementen 26, 28, 30 handelt es sich z. B. um hydraulisch oder mechanisch verstellbare Keile, Spannschrauben und dergleichen.

Der Träger 22 weist eine Grundplatte 32 und einen abklappbaren Bügel 34 auf, der das Gehäuse 24 umgreift und ein Spannelement 30 (z.B. eine Spannschraube) trägt. Der Bügel 34 ist durch eine nicht gezeigte Arretierung in der in Fig. 1 gezeigten Position fixiert, so dass das Gehäuse 24 mit Hilfe des Spannelements 30 gegen die auf der entgegengesetzten Seite angeordneten Spannelementen 26, 28 gespannt werden kann, die sich ihrerseits an der Grundplatte 32 abstützen.

Die Grundplatte 32 ist mit Hilfe eines Kupplungsmechanismus 36 (z. B. durch hydrostatische Klemmung) in einer definierten Axialposition und einer definierten Winkelstellung drehfest an ein Ende einer Welle 38 angekuppelt, die drehbar in dem Schenkel 20 der Spannplatte 10 gelagert ist. Im gezeigten Beispiel nimmt der Schenkel 20 einen Schneckentrieb mit einem Schneckenrad 40 und einer Schnecke 42 für den Drehantrieb der Welle 38 auf. Die Schnecke 42 weist im gezeigten Beispiel einen Vierkantkopf 44 auf, an den ein nicht gezeigtes drehantreibbares Werkzeug der Werkzeugmaschine, beispielsweise ein Schrauber, ankuppelbar ist. Mit Hilfe dieses Schraubers kann folglich die Welle 38 mit der durch den Schneckentrieb bewirkten Getriebeuntersetzung gedreht werden, so dass sich auch der Träger 22 und das darauf eingespannte Gehäuse 24 kontrolliert um eine Achse X drehen lassen, die die Bearbeitungsachse Z rechtwinklig schneidet. Eine Winkelmesseinrichtung 46, beispielsweise ein Inkrementgeber, erlaubt es, den Drehwinkel des Trägers 22 relativ zur Spannplatte 10 präzise zu kontrollieren.

Der in Fig. 1 linke Schenkel 18 der Spannplatte 10 nimmt einen um die Achse X drehbaren und axial verstellbaren Spannstempel 48 auf, der beispielsweise mit Hilfe eines im Inneren des Schenkels 18 untergebrachten Hydraulikantriebs ausgefahren werden kann und dann mit seinem freien Ende auf das Gehäuse 24 drückt, um dieses zusätzlich in seiner Position zu sichern. Wenn der Träger 22 um die Achse X gedreht wird, braucht diese Einspannung nicht gelöst zu werden, da sich der Spannstempel 48 mitdrehen kann.

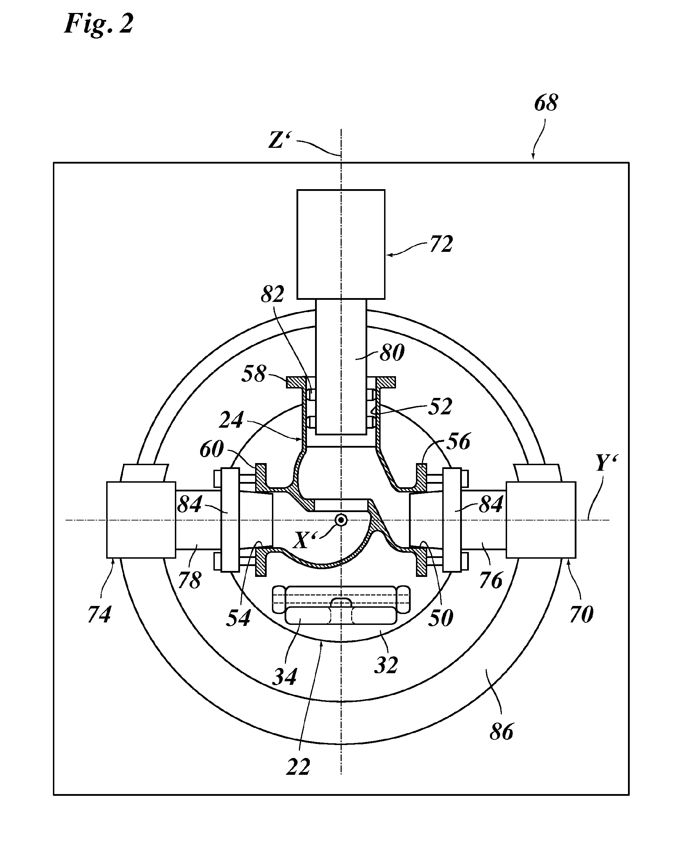

Wie deutlicher in Fig. 2 zu erkennen ist, weist das Gehäuse 24 im gezeigten Beispiel drei Anschlussöffnungen 50, 52, 54 auf, die jeweils von einem Flansch 56, 58, 60 umgeben sind und deren Achsen in einer gemeinsamen Ebene liegen (in der Zeichenebene in Fig. 2). In Fig. 1 sind lediglich die Anschlussöffnung 50 und die Flansche 56, 58 zu erkennen. Das Gehäuse 24 ist in Fig. 1 so justiert worden, dass die durch die Achsen der Anschlussöffnungen definierte Ebene senkrecht auf der Achse X steht und die Bearbeitungsachse Z enthält. Außerdem fällt der Schnittpunkt der Achsen der drei Anschlussöffnungen mit dem Schnittpunkt der Achsen X und Z zusammen. In dem in Fig. 1 gezeigten Zustand fällt daher die Achse der Anschlussöffnung 52 (von der man nur den Flansch 58 sieht) mit der Bearbeitungsachse Z zusammen. Durch Drehung des Trägers 22 und des Gehäuses 24 um die Achse X ist es jedoch möglich, das Gehäuse 24 in Positionen zu drehen, in denen die Achse einer der beiden anderen Anschlussöffnungen 50 oder 54 mit der Bearbeitungsachse Z zusammenfällt. Somit ist es möglich, mit Hilfe des Werkzeugs 16 nacheinander sämtliche Anschlussöffnungen des Gehäuses 24 zu bearbeiten, wobei zwischen den einzelnen Bearbeitungsschritten lediglich der Träger 22 um einen geeigneten Winkel um die Achse X gedreht zu werden braucht, ohne dass irgendwelche sonstigen Änderungen an der Einspannung vorgenommen werden müssen.

Während eine Anschlussöffnung mit dem Werkzeug 16 bearbeitet wird, rotiert die Spindel 14 mitsamt der Spannplatte 10, dem Träger 22 und dem Gehäuse 24 um die Bearbeitungsachse Z. Um die dabei auftretenden Fliehkräfte aufzufangen, sind die freien Enden der Schenkel 18, 20 der Spannplatte 10 durch Riegel 62 miteinander verbunden. Außerdem enthält die Spannplatte 10, beispielsweise in ihrem Schenkel 18, einen Unwuchtsensor 64, mit dem kontrolliert werden kann, ob die Unwucht innerhalb zulässiger Grenzen bleibt. Erforderlichenfalls wird die Unwucht durch Anbringung von Ausgleichsgewichten 66 ausgeglichen. Der Unwuchtsensor kann wahlweise auch im Lagerbereich der Spindel 14 angeordnet sein.

Im folgenden soll anhand der Fig. 2 näher erläutert werden, wie das Gehäuse 24 auf dem Träger 22 ausgerichtet wird. Hierzu ist ein besonderer Ausrichttisch 68 vorgesehen, der in Fig. 2 im Grundriss dargestellt ist. Auf dem Ausrichttisch sind drei Zentriereinheiten 70, 72, 74 montiert, die jeweils einer der Anschlussöffnungen 50, 52, 54 des Gehäuses 24 zugeordnet sind. Die Zentriereinheiten 70 und 74 liegen einander gegenüber und definieren eine Achse Y'. Die Zentriereinheit 72 definiert eine Achse Z', die in dem in Fig. 2 gezeigten Zustand die Achse Y' rechtwinklig schneidet.

Der Träger 22 ist von der Welle 38 (Fig. 1) gelöst und in einer definierten Position so auf dem Ausrichttisch 68 fixiert worden, dass seine Achse X', in dem in Fig. 1 gezeigten Zustand mit der Achse X zusammenfällt, rechtwinklig zu den Achsen Y' und Z' verläuft (also rechtwinklig zur Zeichenebene in Fig. 2) und durch den Schnittpunkt dieser Achsen Y' und Z' geht. Der Bügel 34 befindet sich in Fig. 2 in einer hochgeklappten Position, so dass das Gehäuse 24 auf die Grundplatte 32 des Trägers 22 aufgelegt werden kann. Mit Hilfe der Spannelemente 26, 28 (Fig. 1), die als verstellbare Keile ausgebildet sind, wird das Gehäuse dann unterfüttert, bis die Anschlussöffnungen 50, 52 und 54 grob mit den Zentriereinheiten 70, 72 und 74 ausgerichtet sind. Die Zentriereinheiten 70 und 74 weisen jeweils einen (z.B. hydraulisch) ausfahrbaren und am freien Ende konisch verjüngten Zentrierstempel 76 bzw. 78 auf, der in die Anschlussöffnung 50 und 54 des Gehäuses einfährt. Dadurch werden die Achsen der Anschlussöffnungen 50 und 54 auf die Achse Y' zentriert. Das Gehäuse 24 hat dann nur noch einen Freiheitsgrad, nämlich eine Drehung um die Achse Y'. Zur Festlegung dieses Freiheitsgrades wird aus der Zentriereinheit 72 ein Zentrierstempel 80 ausgefahren, so dass er in die Anschlussöffnung 52 eingreift. Dieser Zentrierstempel 80 weist radial ausfahrbare Spreizglieder 82 auf, die sich an die Innenfläche der Anschlussöffnung 52 anlegen und so das Gehäuse 24 in einer Position halten, in der die Achse der Anschlussöffnung 52 auf die Achse Z' zentriert ist.

Die Zentriereinheiten 70 und 74 weisen Spannelemente 84 auf, die an den Flanschen 56 und 60 angreifen. Mit Hilfe dieser Spannelemente 84 und mit Hilfe der Spreizglieder 82 wird das Gehäuse 24 sicher in der in Fig. 2 gezeigten Position fixiert. Die Spannelemente 26, 28 (Fig. 1) werden dann so eingestellt, dass sie das Gehäuse in dieser Position stabil auf der Grundplatte 32 abstützen. Schließlich wird der Bügel 34 über das Gehäuse 24 geschwenkt und fixiert, und mit Hilfe des Spannelements 30 wird das Gehäuse fest auf dem Träger 22 eingespannt.

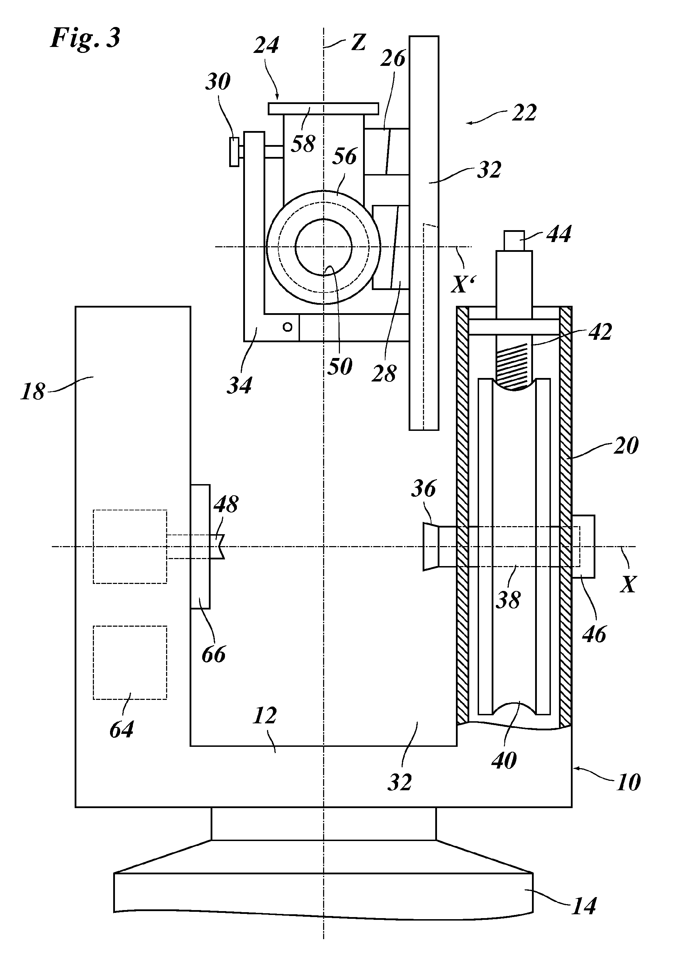

Anschließend werden die Zentrierstempel 76, 78 und 80 zurückgefahren, so dass der Träger 22 mit dem Gehäuse 24 beispielsweise mit Hilfe eines Krans vom Ausrichttisch 68 abgenommen und in die Spannplatte 10 eingesetzt werden kann, wie in Fig. 3 gezeigt ist. Die Welle 38 ist zuvor in eine Null-Position gedreht worden, in der der Träger 22 angekuppelt werden kann.

Die Positionen der Zentriereinheiten 70, 72, 74 auf dem Ausrichttisch 68 (Fig. 2) und die Position des Trägers 22 auf der Welle 38 (Fig. 1) sind so aufeinander abgestimmt, dass die Achse Z' in Fig. 2 in Bezug auf den Träger 22 die gleiche Lage aufweist wie die Achse Z in Fig. 1. Dadurch ist sichergestellt, dass in Fig. 1 der Schnittpunkt der durch die Anschlussöffnungen 50, 52 und 54 definierten Achsen mit dem Schnittpunkt der Achsen X und Z zusammenfällt. Der in Fig. 2 gezeigten Achse Y' entspricht in Fig. 1 eine Achse Y, die senkrecht zur Zeichenebene verläuft und durch die Schnittpunkte der Achsen X und Z geht.

Schließlich wird der Spannstempel 48 (Fig. 1) ausgefahren, um das Gehäuse 24 endgültig in seiner Position auf der Spannplatte 10 zu fixieren. Der Spannstempel 48 durchgreift dabei einen Schlitz des Bügels 34.

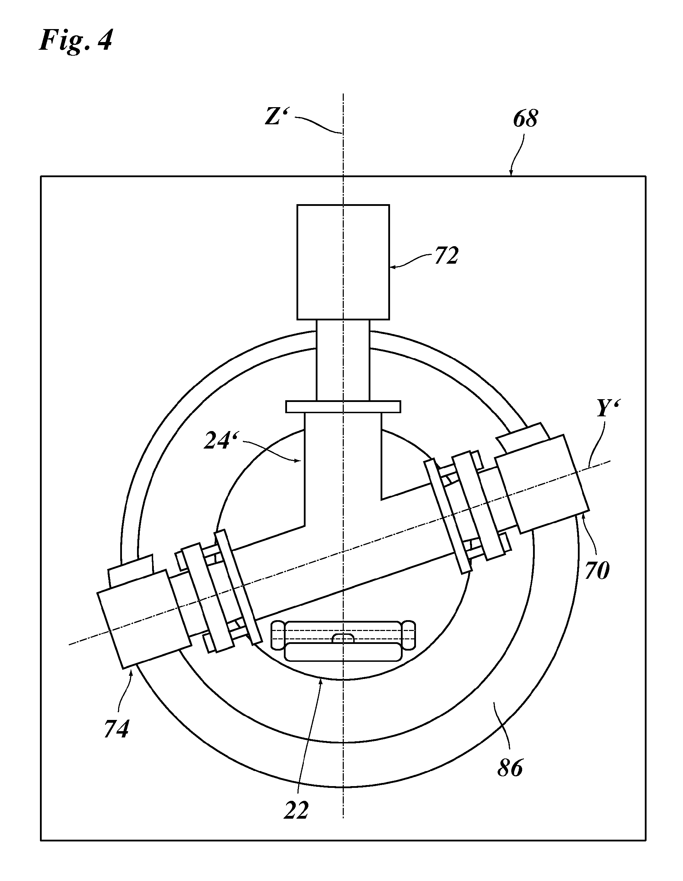

Wie Fig. 2 zeigt, sind die Zentriereinheiten 70 und 74 auf einem Drehschemel 86 montiert, der relativ zum Ausrichttisch 68 und damit auch relativ zu der Zentriereinheit 72 um die Achse X' drehbar ist, die senkrecht zur Zeichenebene in Fig. 2 durch den Schnittpunkt der Achsen Y' und Z' geht. Diese drehbare Lagerung der Zentriereinheiten 70 und 74 erlaubt auch die Zentrierung von Gehäusen, bei denen die Achsen der Anschlussöffnungen keine rechten Winkel miteinander bilden. Die Zentrierung eines solchen Gehäuses 24' auf dem Ausrichttisch 68 ist in Fig. 4 dargestellt. Der Drehschemel 86 ist hier so verdreht worden, dass die Achse Y' nun mit der Achse Z' einen Winkel bildet, der dem Winkel zwischen den Achsen der Leitungsanschlüsse des Gehäuses 24' entspricht. Der Schnittpunkt der Achsen Y' und Z' liegt jedoch nach wie vor auf der durch den Träger 22 definierten Achse X' (Fig. 2).

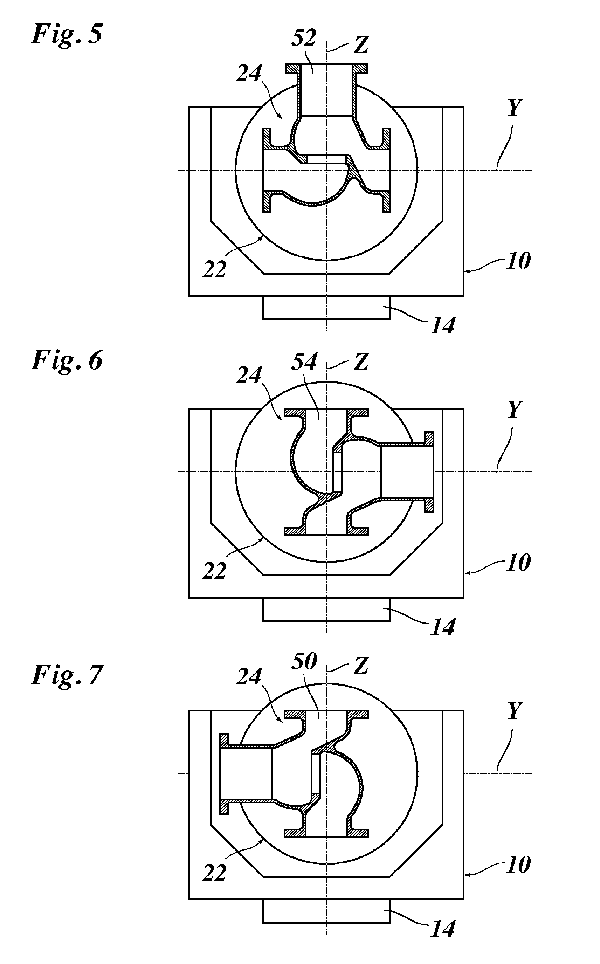

Fig. 5 bis 7 zeigen vereinfachte Ansichten der Spannvorrichtung in dem Zustand gemäß Fig. 1, jedoch mit Blick in Richtung der Achse X.

In Fig. 5 hat das Gehäuse 24 die gleiche Orientierung wie in Fig. 1. Die Anschlussöffnung 52 weist nach oben und wird bearbeitet. Anschließend wird der Träger 22 mit Hilfe des Spindeltriebs um einen Winkel von exakt 90° um die Achse X gedreht, so dass nunmehr die Anschlussöffnung 54 nach oben weist und bearbeitet werden kann (Fig. 6). Die genaue Einhaltung des Drehwinkels wird mit Hilfe der Messeinrichtung 46 überwacht. Um schließlich auch die Anschlussöffnung 50 zu bearbeiten, wird der Träger 22 um exakt 180° aus der in Fig. 6 gezeigten Stellung in die in Fig. 7 gezeigte Position gedreht. So lassen sich in rationeller Weise sämtliche Anschlussöffnungen des Gehäuses 24 bearbeiten.

Wenn das in Fig. 3 gezeigte Gehäuse 24' bearbeitet werden soll, so wird der von der Winkelmesseinrichtung 46 kontrollierte Drehwinkel des Trägers so gewählt, dass er der Winkellage der Anschlussöffnungen dieses Gehäuses entspricht.

In dem hier beschriebenen Beispiel ist die Winkelmesseinrichtung 46 an der Welle 38 angeordnet, so dass sie unmittelbar die Winkellage dieser Welle misst. Alternativ ist es jedoch auch möglich, die Winkelmesseinrichtung an der Schnecke 42 oder, allgemein, auf der Eingangsseite eines (möglichst spielfreien) Untersetzungsgetriebes anzuordnen, so dass eine höhere Winkelauflösung erreicht wird.

## Patentansprüche

1. Vorrichtung zum Einspannen von Gehäusen (24; 24'), die mehrere Anschlussöffnungen (50, 52, 54) aufweisen, deren Achsen in einer gemeinsamen Ebene liegen, in eine Werkzeugmaschine, mit einer relativ zu einem Werkzeug (16) der Werkzeugmaschine um eine Bearbeitungsachse (Z) drehbaren Spannplatte (10) und Spannelementen (26, 28, 30) zum Fixieren des Gehäuses (24; 24') in einer auf die Bearbeitungsachse (Z) ausgerichteten Position auf der Spannplatte (10), **dadurch gekennzeichnet, dass** die Spannelemente (26, 28, 30) an einem Träger (22) angeordnet sind, der relativ zu der Spannplatte (10) um eine Achse (X) drehbar ist, die die Bearbeitungsachse (Z) rechtwinklig schneidet und senkrecht auf der durch die Achsen der Anschlussöffnungen (50, 52, 54) definierten Ebene steht, und dass dem Träger (22) eine Winkelmesseinrichtung (46) zugeordnet ist.

2. Vorrichtung nach Anspruch 1, bei der die Spannplatte (10) auf einer Spindel (14) montiert ist, die um die Bearbeitungsachse (Z) drehantreibbar ist.

3. Vorrichtung nach Anspruch 2, mit einem Unwuchtsensor (64) zur Messung einer Unwucht der Einheit aus Spannplatte (10), Träger (22) und Gehäuse (24; 24').

4. Vorrichtung nach einem der vorstehenden Ansprüche, bei der die Spannplatte (10) eine U-förmige Konfiguration mit beiderseits des Trägers (22) aufragenden Schenkeln (18, 20) hat und der Träger (22) drehbar an mindestens einem dieser Schenkel (20) gelagert ist.

5. Vorrichtung nach einem der vorstehenden Ansprüche, bei der die Spannplatte (10) eine drehbar gelagerte Welle (38) aufweist und der Träger (22) mittels einer Kupplungseinrichtung (36) in definierter Axialposition und Winkelposition lösbar an der Welle (38) fixierbar ist.

6. Vorrichtung nach Anspruch 5, bei der der Träger (22) eine an der Welle (38) fixierbare Grundplatte (32) aufweist, die mindestens eines der Spannelemente (26, 28) zur Abstützung des Gehäuses (24; 24') trägt.

7. Vorrichtung nach Anspruch 6, bei der auf der Grundplatte (32) ein abklappbarer Bügel (34) angeordnet ist, der mindestens ein weiteres Spannelement (30) trägt, mit dem das Gehäuse (24; 24') gegen die Grundplatte (32) spannbar ist.

8. Vorrichtung nach den Ansprüchen 4 und 7, bei der der Schenkel (18) der Spannplatte (10), der auf der der Grundplatte (32) entgegengesetzten Seite des Gehäuses (24; 24') liegt, einen ausfahrbaren und zurückziehbaren Spannstempel (48) aufweist, mit dem das Gehäuse (24; 24') zusätzlich gegen die Grundplatte (32) spannbar ist.

9. Vorrichtung nach einem der Ansprüche 5 bis 8, mit einem Ausrichttisch (68), auf dem der Träger (22) in definierter Position fixierbar ist und auf dem mehrere Zentriereinheiten (70, 72, 74) angeordnet sind, die jeweils einen ausfahrbaren und zurückziehbaren Zentrierstempel (76, 78, 80) zum Zentrieren einer der Anschlussöffnungen (50, 52, 54) des Gehäuses (24; 24') aufweist, wobei die Anordnung der Zentriereinheiten (70, 72, 74) auf dem Ausrichttisch (68) so gewählt ist, dass der Schnittpunkt der durch diese Zentriereinheiten definierten Achsen der Anschlussöffnungen (50, 52, 54) des Gehäuses (24; 24') dieselbe Lage relativ zum Träger (22) aufweist wie der Schnittpunkt der Bearbeitungsachse (Z) und der Drehachse (X) des Trägers (22), wenn dieser auf der Welle (38) der Spannplatte (10) fixiert ist.

10. Vorrichtung nach Anspruch 9, bei der mindestens eine der Zentriereinheiten (72) stationär auf dem Ausrichttisch (68) angeordnet ist und mindestens eine weitere der Zentriereinheiten (70, 74) auf dem Ausrichttisch um eine Achse (X') drehbar ist, die mit der Drehachse (X) des Trägers (22) zusammenfällt, wenn der Träger auf dem Ausrichttisch fixiert ist.

11. Vorrichtung nach einem der vorstehenden Ansprüche, mit einer Antriebseinrichtung (40, 42, 44) für den Drehantrieb des Trägers (22) auf der Spannplatte (10).

12. Vorrichtung nach Anspruch 11, bei der die Antriebseinrichtung ein Untersetzungsgetriebe (40, 42) aufweist.

13. Vorrichtung nach Anspruch 12, bei der das Untersetzungsgetriebe (40, 42) antriebsseitig eine Kupplung (44) zum Ankuppeln an ein drehantreibbares Werkzeug der Werkzeugmaschine aufweist.

14. Vorrichtung nach Anspruch 4 und einem der Ansprüche 12 und 13, bei der das Untersetzungsgetriebe (40, 42) in einem Schenkel (20) der Spannplatte (10) angeordnet ist.
